# EUROPEAN PATENT SPECIFICATION

(11) **EP 2 571 217 B1**
(45) Date of publication and mention of the grant of the patent: **24.12.2014**
(21) Application number: 11290408.1
(22) Date of filing: 13.09.2011
(51) Int. Cl.: H04L 27/18, H04L 27/34, H04L 27/36, H04B 10/516, H04B 10/556, H04B 10/54

(54) **Method for transmitting optical signals with adaptive bitrate and a corresponding transmitter.**
Verfahren zur Übertragung optischer Signale mit adaptiver Bitrate und ein dazugehöriger Sender.
Procédé de transmission de signaux optiques avec un débit binaire adaptif et un transmitteur correspondant.

(43) Date of publication of application: 20.03.2013
(73) Proprietor: ALCATEL LUCENT, 92100 Boulogne-Billancourt (FR)
(72) Inventor: Bertran-Pardo, Oriol , Alcatel Bell Labs France, 91620 Nozay (FR); Salsi, Massimiliano , Alcatel Bell Labs France, 91620 Nozay (FR); Renaudier, Jérémie , Alcatel Bell Labs France, 91620 Nozay (FR)
(74) Representative: Croonenbroek, Thomas Jakob

(56) References cited:
- WO-A1-2010/136680
- BRIAN TEIPEN ET AL: "Adaptive optical transmission for dynamic optical networks", IEEE 12TH INTERNATIONAL CONFERENCE ON TRANSPARENT OPTICAL NETWORKS (ICTON 2010), 27 June 2010 (2010-06-27), pages 1-4, XP031733262, NJ, USA ISBN: 978-1-4244-7799-9
- XIANG ZHOU ET AL: "Multi-Level, Multi-Dimensional Coding for High-Speed and High-Spectral-Efficiency Optical Transmission", JOURNAL OF LIGHTWAVE TECHNOLOGY, vol. 27, no. 16, 15 August 2009 (2009-08-15), pages 3641-3653, XP011268786, NY, US ISSN: 0733-8724, DOI: 10.1109/JLT.2009.2022765
- JIANJUN YU ET AL: "Ultra-High-Capacity DWDM transmission system for 100G and beyond", IEEE COMMUNICATIONS MAGAZINE, vol. 48, no. 3, 1 March 2010 (2010-03-01), pages S56-S64, XP011305455, NY, US ISSN: 0163-6804
- YING GAO ET AL: "Optical Multi-Level Signal Generation Using Four-Wave-Mixing", JOURNAL OF LIGHTWAVE TECHNOLOGY, vol. 29, no. 14, 1 July 2011 (2011-07-01), pages 2166-2172, XP011330112, NY, US ISSN: 0733-8724, DOI: 10.1109/JLT.2011.2157458

## Description

### BACKGROUND OF THE INVENTION

The present invention relates to the field of optical transmissions and in particular of the bitrate adaptation of transmitted signals in an optical network.

Over the past few years, research on communication networks has leaded to the development of high order modulation format allowing high data throughput of several bits per symbol such as Quadrature Amplitude Modulation (QAM) or Quadrature Phase Shift Keying (QPSK) modulation combined with Polarization Division Multiplexing (PDM). However, with such modulation formats, the higher the data rate, the more impacted by physical impairments the signals during transmission through the network so that the transmission reach is reduced. As a consequence, the current trend is to develop transmission means with adaptive bitrate capabilities allowing modification of the bitrate in order to adapt the said bitrate according to the desired transmission reach, furthermore, such bitrate adaptation needs to have a fine granularity between two successive possible bitrate values in order to provide a good adaptation to the transmission needs.

One obvious way to manage such bitrate adaptation would be to change the symbol rate. However, such solution requires the transmitters and receivers to work with several clock frequencies which is very challenging and difficult to implement.

Another possible solution would be to use modulation format having different bit per symbol rates, for example Polarization Division Multiplexing Binary Phase Shift Keying (PDM-BPSK) and Polarization Division Multiplexing Quadrature Phase Shift Keying (PDM-QPSK) but then the granularity is two bits (4 bits per symbol for PDM-BPSK and 2 bits per symbol for PDM-QPSK) which is not optimal. Similar to this solution, patent application WO 2010/136680 proposes changing the transmission mode to adapt the bitrate.

### SUMMARY OF THE INVENTION

It is therefore an object of the present invention to overcome the above mentioned drawbacks of the state of the art and to provide a solution allowing adaptive bitrate capabilities with a fine granularity and being easy to implement.

Thus, the present invention refers to a method according to claim 1. Further details of said method are provided in dependent claims 2 - 7.

The present invention also refers to a transmitter according to claim 8.

Further details of said transmitter are provided in dependent claims 9 and 10.

### BRIEF DESCRIPTION OF THE DRAWINGS

FIG.**1** is a diagram of a PDM-16QAM constellation;
FIG.**2** is a diagram of the 256 symbol states obtained with a PDM-16QAM mapping.
FIG.**3a** is a diagram of an E-QAM (16, 8) constellation;
FIG.**3b** is a diagram of an E-QAM (16, 4) constellation ;
FIG.**3c** is a diagram of an E-QAM (16, 2) constellation ;
FIG.**4a** is a diagram of the 128 symbol states obtained with an E-QAM (16, 8);
FIG.**4b** is a diagram of the 64 symbol states obtained with an E-QAM (16, 4);
FIG.**4c** is a diagram of the 32 symbol states obtained with an E-QAM (16, 2);
FIG.**5a** is a diagram of a PDM-4QAM constellation;
FIG.**5b** is a diagram of an E-QAM (4, 2) constellation;
FIG.**5c** is a diagram of an E-QAM (4, 1) constellation;
FIG.**6** is a diagram of a transmitter according to an embodiment of the present invention;
FIG.**7** is a diagram of a coherent receiver;
FIG.**8** is a diagram of the interactions between different entities of the network;

### DETAILED DESCRIPTION OF THE INVENTION

As used herein, the term "QAM" refers to the acronym Quadrature Amplitude Modulation;
As used herein, the term E-QAM refers to the acronym Elastic Quadrature Amplitude Modulation;
As used herein, the term "QPSK" refers to the acronym Quadrature Phase Shift Keying;
As used herein, the term "PDM" refers to the acronym Polarization Division Multiplexing;
As used herein, the term "BPSK" refers to Binary Phase Shift Keying;
As used herein, the term "WDM" refers to Wavelength Division Multiplexing;
As used herein, the term "MZ" refers to the abbreviation Mach-Zehnder;

The embodiments of the present invention refer to a method for adapting a bitrate of a modulated signal with a fine granularity in an optical network. The modulation scheme used herein corresponds to a quadrature amplitude modulation (QAM) comprising a plurality of QAM symbol states, the said plurality being equal to a given power of two, 2^{N} with N being an natural number larger than one, combined with at least one other coded modulation, for example a polarization division multiplexing (PDM), so that a QAM signal is transmitted on each of the coded state of the coded modulation. Such modulation scheme allows to obtain a high number of bits per symbol and therefore a high bitrate. For example, in the case of a PDM-16QAM wherein a 16QAM symbol comprises 4 bits and the PDM comprises 2 coded states also called polarization states in the case of a PDM, the resulting modulation scheme comprises 8 bits per symbol.

According to the embodiments of the present invention, in order to adapt the number of bits per symbol without changing the modulation format, a correlation is introduced between the coded states so that for a given QAM symbol state of a given coded state, only a predetermined number of associated QAM symbol states of the other coded state are selected as possible transmitted QAM symbol states, said predetermined number being a predetermined power of two, 2^{M}, smaller than the given power of two, 2^{N}, with M being a natural number smaller than N. The goal of such selection is to have a signal with symbol states that are more distinct from each other so that the transmission reach is higher for a similar quality of signal at destination.

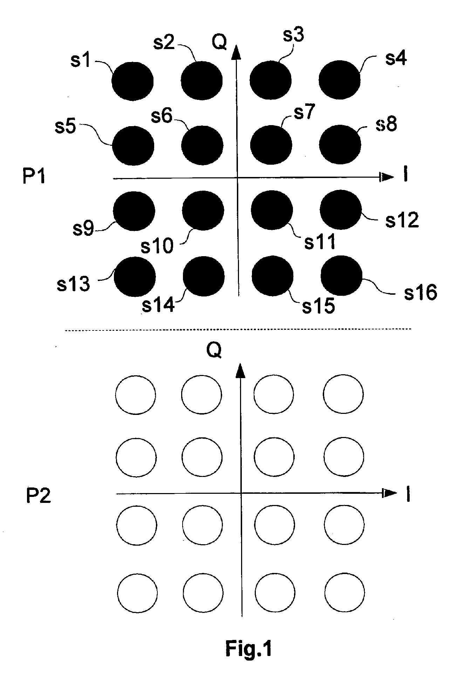

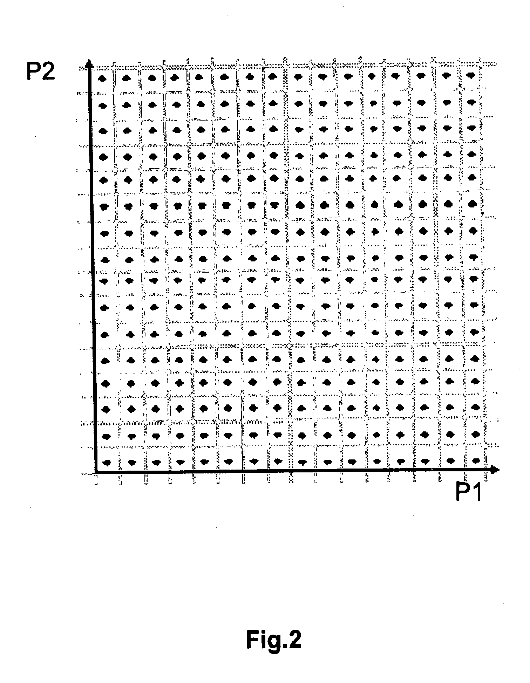

To better understand the embodiments of the present invention, figure 1 represents two QAM constellations with the axis representing the inphase I and quadrature Q parts of the signal corresponding to the first and second polarization states P1 and P2 in the case of a PDM-16QAM modulation scheme. Each QAM constellation comprises 16 symbol states represented by a square grid having four lines and four columns, each symbol state being noted s1, s2,...s16 coding a 4 bit signal, for example s1 may refer to the coding 0000. The combination of both polarization states leads to a signal having 8 bits per symbol which corresponds to 2⁸=256 combinations of symbol state. The said 256 combinations are schematically represented on a diagram in figure 2 wherein the grid with the 256 points represents the mapping of the 256 symbol states, the x-axis representing the first polarization P1 and the y-axis representing the second polarization P2. It has to be noted that this representation is a simplified version as the symbol states lie actually in a four dimension signal space as each QAM constellation correspond to a two dimension (Inphase and Quadrature) signal space and the said QAM constellation belongs to a two dimensional (first and second coded polarization states) signal space. This simplified representation allows a reduction of the four dimensional signal space to a schematic two dimensional space with a simple visualization.
There is therefore 256 possible symbol states and for each symbol time slot, one, among the 256 symbol states, is transmitted.

Besides, along transmission through the network, in general through optical fibres, an optical signal is impacted by physical impairments which lead to signal degradations such as distortion. The said degradations can be represented in the diagram of figure 2 as an anarchic displacement of the positions of the symbol states, the larger the degradation, the larger the displacement. The consequence is that a high degradation may lead to a signal error at destination if the symbol state coded at the emission moves toward a position corresponding to another symbol state. By selecting a reduced number of symbol states, the number of bits per symbol and therefore the amount of data is reduced but the distance between two adjacent symbol states can be increased which allows to provide a modulation scheme more robust against the physical impairments.

Thus, in order to obtain the desired result, the selected quadrature amplitude modulation symbol states of the predetermined power of two, 2^{M}, of the second coded state are chosen so that:
- the Euclidean distance between two selected adjacent symbol states represented on a quadrature amplitude modulation constellation is the largest and,
- a symbol state of the second coded state belongs to at least one predetermined power of two, 2^{M}, associated with a given quadrature amplitude modulation symbol state of a first coded state.

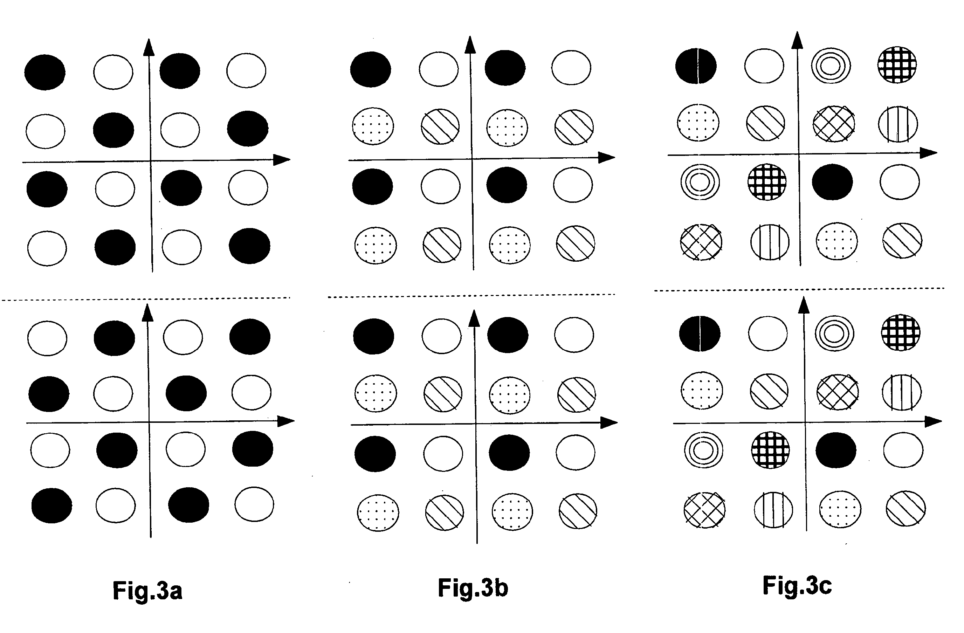

Indeed, the combination of these two conditions allows to obtain the largest Euclidean distance between two adjacent symbol states in the resulting four dimensional signal space schematically represented in the simplified two dimension mapping diagram and therefore the most optimal solution according to the signal degradation.
Such selection is illustrated in figure 3a, 3b and 3c in the case of the PDM-16QAM modulation scheme presented in figure 1. Figures 3a, 3b and 3c represent the QAM constellation for both polarization states as previously described in figure 1.

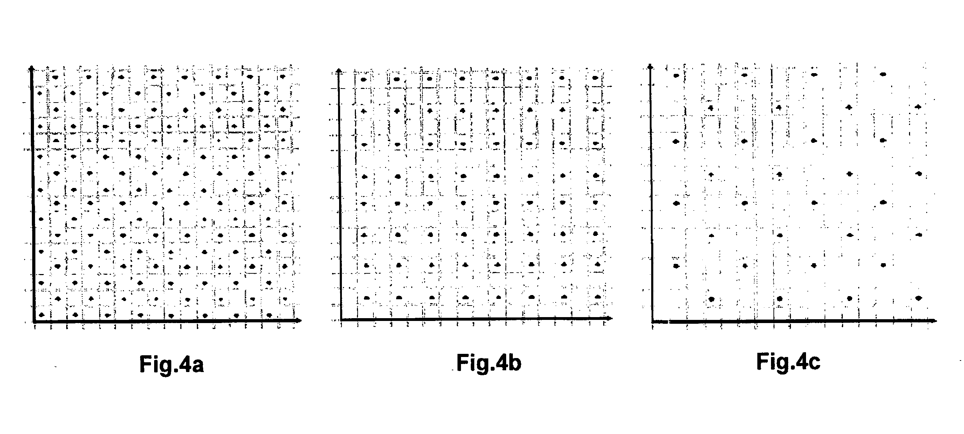

In figure 3a, for each polarization state, half of the symbol states are white and half of the symbol states are black and two adjacent symbols are different. For each symbol state of the first polarization state, only 2³=8 predetermined symbol states of the second polarization are selected as possible transmitted QAM symbol states. The selection is achieved so that to a black symbol state of the first polarization state, only the black symbol states of the second polarization are selected as possible transmitted QAM symbol states and for a white symbol state of the first polarization state, only the white symbol states of the second polarization are selected as possible transmitted QAM symbol states. For example, if the symbol state s1 of the first polarization is transmitted, only symbol states s1, s3, s5, s7, s9, s11, s13, s15 are selected as possible transmitted symbol states on the second polarization. The result is a mapping according to a 16QAM on the first polarization state and to a 8-state subset on the second polarization state, the said 8-state subset being dependent of the symbol state which is selected in the first polarization. Such mapping is herein called E-QAM(16,8) and leads to a 7 bits per symbol signal having a resulting mapping diagram schematically represented in the two dimension diagram of figure 4a. The resulting mapping of figure 4a corresponds to the resulting mapping of fig.2 wherein half of the symbol states have been removed (consequently, only 128 states are coded which corresponds to 7 bits per symbol) so that the Euclidean distance between two adjacent symbol states has been increased with respect to the Euclidean distance between two symbol states of fig.2.

In figure 3b, for each polarization state, the symbol states are gathered in 4 groups (black, white, dotted and diagonal stripped) of four symbol states wherein the identical symbol states are located at equal distance from each other, the said distance being the same for all the groups of symbol states. For each symbol state of the first polarization state, only 2²=4 predetermined symbol states of the second polarization are selected as possible transmitted QAM symbol states. The selection is achieved so that to a black symbol state of the first polarization state, only the black symbol states of the second polarization are selected as possible transmitted QAM symbol states. Accordingly, for the other groups, only the four symbol states of the group having the same type in the second polarization are selected as possible transmitted QAM symbol states. The result is a mapping according to a 16QAM on the first polarization state and to a 4-state subset on the second polarization state depending on the selected symbol state of the first polarization herein called E-QAM(16,4) leading to a 6 bits per symbol signal having a resulting mapping diagram represented in figure 4b. The resulting mapping of figure 4b corresponds to the resulting mapping of fig.4a wherein half of the symbol states have been removed (consequently, only 64 states are coded which corresponds to 6 bits per symbol) so that the Euclidean distance between two adjacent symbol states has been increased with respect to the Euclidean distance between two symbol states of fig.4a.

In figure 3c, for each polarization state, the symbol states are gathered in 8 groups (black, white, dotted, circled, vertical stripped, diagonal stripped, squared and double diagonal stripped) of two symbol states wherein the identical symbol states are located at equal distance from each other, the said distance being the same for all the groups of symbol states. For each symbol state of the first polarization state, only 2 predetermined symbol state of the second polarization are selected as possible transmitted QAM symbol states. The selection is achieved so that to a symbol state of a group of the first polarization state, only the two symbol states of the group of the same type of the second polarization are selected as possible transmitted QAM symbol states. The result is a mapping according to a 16QAM on the first polarization state and to a 2-state subset on the second polarization state depending on the selected symbol state of the first polarization herein called E-QAM(16,2) leading to a 5 bits per symbol signal having a resulting mapping diagram represented in fig.4c. The resulting mapping of figure 4c corresponds to the resulting mapping of fig.4b wherein half of the symbol states have been removed (consequently, only 32 states are coded which corresponds to 5 bits per symbol) so that the Euclidean distance between two adjacent symbol states has been increased with respect to the Euclidean distance between two symbol states of fig.4b.

Besides, it has to be noted that the types of symbol states of the second polarization may be inverted, for example, in figure 3a, the white and black symbol states of the second polarization can be inverted (the white symbol states can be s1, s3, s5, s7, s9, s11, s13 and s15 or can be s2, s4, s6, s8, s10, s12, s14 and s16) and accordingly in fig.3b and 3c the types of symbol states of the second polarization can be inverted (the distribution of the symbol states of the same type remaining identical (for example s1 and s11 remain of the same type)).

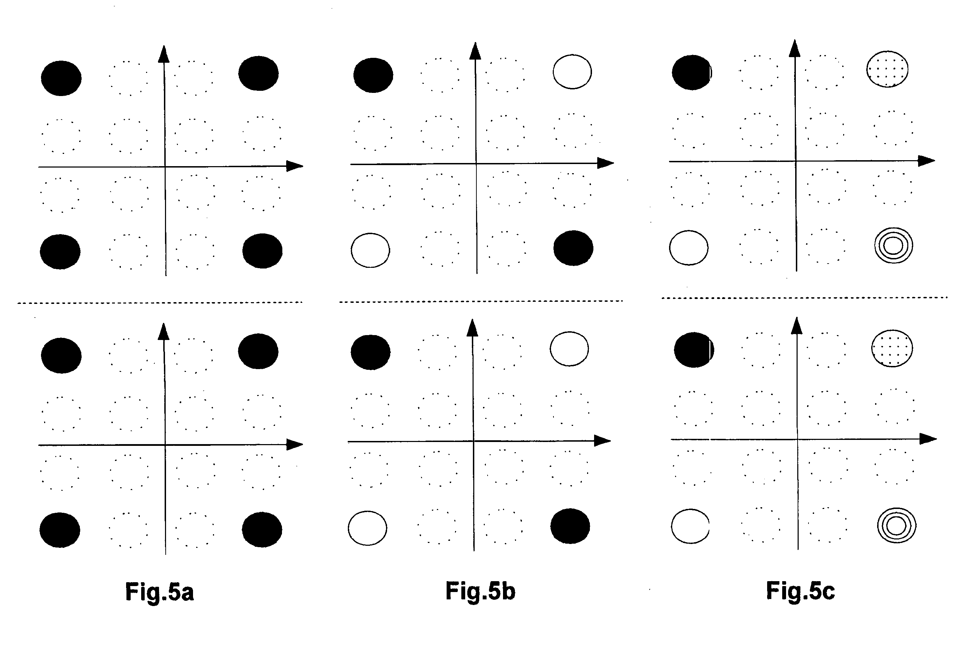

Furthermore, the embodiments of the present invention can also be used to produce a bit per symbol rate lower than 5 bits per symbol. Indeed, as the reception equipments (notably polarization demultiplexer and carrier phase estimation equipments) used for 16QAM signals work usually also with QPSK or 4QAM, a similar correlation between the polarized states can be established. Figure 5a represents a classical PDM-4QAM constellation (using a grid similar to the 16QAM, the dotted circles being not used in the present coding) with four symbol states on each polarization state leading to a 4 bits per symbol rate. As previously, a correlation between both polarization states can be introduced to obtain a reduced number of bits per symbol and to increase the robustness of the signal with respect to the physical impairments. Thus, in figure 5b, the four symbol states are gathered in two groups (black and white) of two symbol states, two identical symbol states being diagonally opposed so that to a black symbol state of the first polarization, only black symbol states of the second polarization state are selected as possible transmitted QAM symbol states resulting in a 3 bits per symbol rate. In fig.5c, the four symbol are different (black, white, dotted and circled) so that to each symbol state of the first polarization, only the symbol state of the same type of the second polarization state is selected as possible transmitted QAM symbol states resulting in a 2 bits per symbol rate.

Thus, using the embodiments of the present invention, based on an initial PDM-16QAM modulation scheme providing 8 bits per symbol rate, all the lower rates can be obtained with a granularity of one bit per symbol shift between two modulation rates.

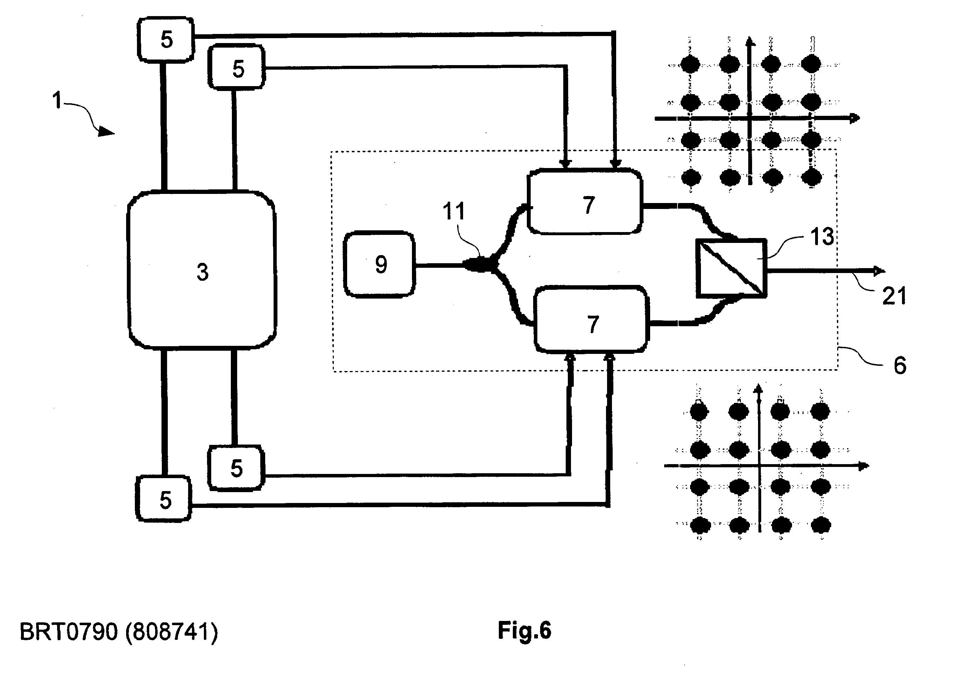

The equipments used to produce signals modulated as described previously will now be described in details. Figure 6 represents an embodiment of a transmitter allowing to apply a modulation scheme according to the embodiments of the present invention in the case of a PDM-16QAM modulation scheme. The transmitter 1 comprises mapping means 3 adapted to receive the digital signal to be modulated and transmitted and a selector allowing to select the desired modulation scheme, according to mapping instructions sent by the control plane, to obtain the desired bit per symbol rate. The mapping means 3 comprise forward error coding means and are configured to produce the inphase and quadrature components corresponding to both polarization states. The said four components are respectively transmitted to four digital to analogical converters 5 to be converted separately. The components of the first and the second polarization are then transmitted to modulation means 6 comprising a first and a second nested Mach-Zehnder (MZ) modulator 7. Both MZ modulators 7 are supplied by an optical signal, corresponding to the carrier sent from a common source comprising a laser 9 and a polarization maintaining fibre 11. The first modulator applies a 16QAM modulation corresponding to the first polarization state and the second modulator applies a correlated or elastic 16-QAM modulation dependent of the desired bit per symbol rate. After modulation on both polarizations by the MZ modulators 7, the modulated signals corresponding to both polarizations are combined in a polarization beam combiner 13 and are transmitted to an optical fibre 21 through the network toward a receiver of an egress node.

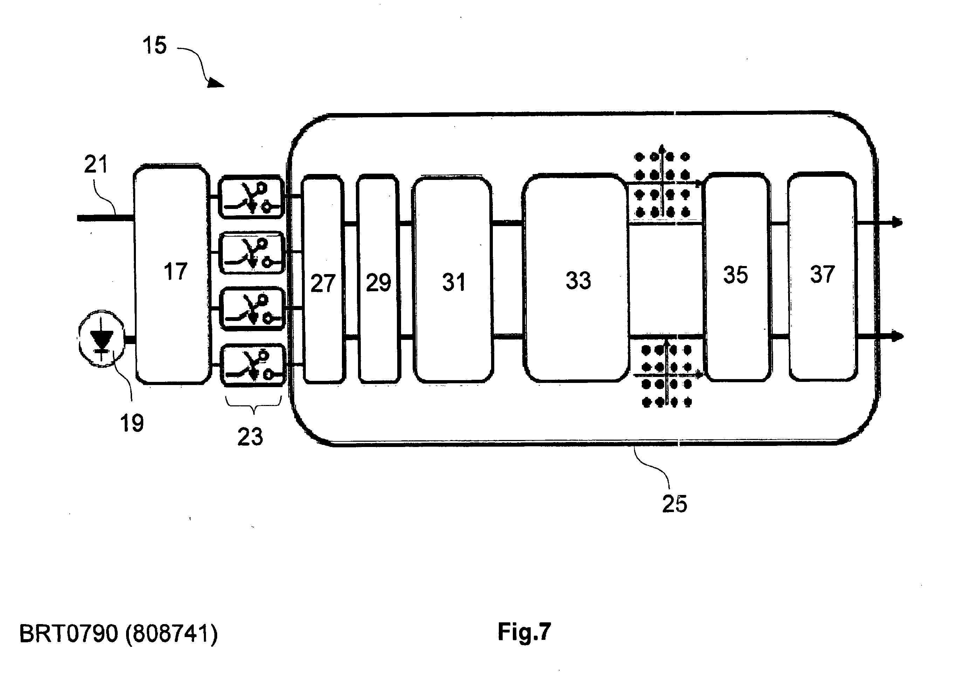

At the egress node, the transmitted signal is received and detected by a receiver comprising common coherent detection means. Fig.7 represents a diagram of such a receiver 15. The receiver 15 comprises detection means 17 connected to a local oscillator 19 tuned at a frequency closed to the frequency of the carrier of the transmitted optical signal received on an optical fibre 21. The detected signal is then converted in analogical to digital conversion means 23. The digital signal obtained at the outputs of the conversion means 23 is then processed by digital signal processing means 25. The said digital processing means 25 comprise re-timing means 27, chromatic dispersion compensation means 29, polarization demultiplexing means 31, frequency and phase recovery means 33, symbol decision means 35 and forward error coding means 37.

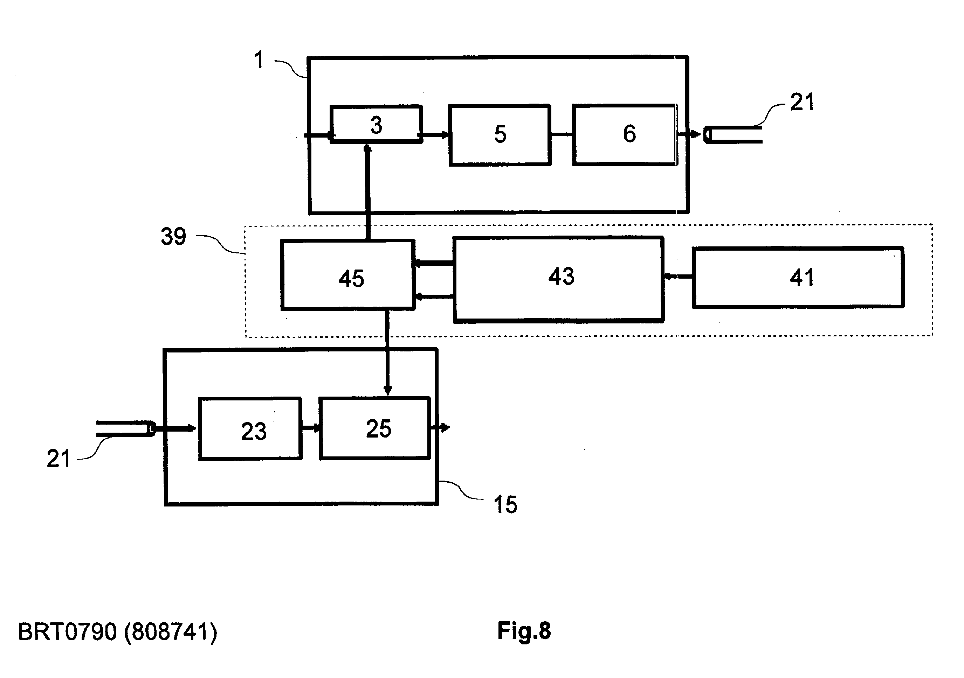

Furthermore, the equipments located at the transmitter 1 level and at the receiver 15 level are managed by control plane equipments 39 as described in figure 8. Fig.8 represents a diagram of a transmitter 1 of an ingress node as described in figure 6, a receiver 15 of an egress node as described in figure 7, control plane equipments 39 and the interactions between the different equipments. The control plane equipments 39 comprise wavelength division multiplexing (WDM) channel planning means 41 configured to distribute the signals to transmit among the different wavelength channels, modulation scheme selection means 43 to select a modulation coding scheme and a mapping look-up table 45 to define the mapping rules according to the selected modulation coding scheme. The selected mapping rules are sent to the mapping means 3 of the transmitter 1. Based on the said mapping rules, the mapping means 3 determine the different components to send to the digital to analogical conversion means 5 according to the mapping rules. The converted components are then sent to the modulation means 6 to be transmitted to an optical fibre 21. The mapping rules applied at the transmitter 1 level are also sent to digital signal processing means 25 of the receiver 15. The said processing means 25 receive from analogical to digital conversion means 23 the signal transmitted from the transmitter 1 through the optical fibre 21. Knowing the mapping rules applied at the transmitter 1 level, the digital signal processing means 25 are capable of decoding the transmitted signal and retrieving the transmitted data whatever the modulation scheme applied at the transmitter side and the associated bit per symbol rate used for the transmission.

In the above description, a QAM with 16 symbol states is described, however, any other QAM, for example 8QAM or 32QAM can be used as modulation format for the first polarization state and as a basis for the second polarization state (nevertheless it is preferred that the same format be used all over the network as the transmitters and receivers can be configured to work with only one format).

Furthermore, the coded states refer to the polarization states of a polarization division multiplexing. However, the embodiments of the present invention are not limited to coded states corresponding to PDM but also refer to spatial mode multiplexing or a combination of spatial mode multiplexing and polarization division multiplexing. Indeed, in the same way as the PDM, spatial mode multiplexing comprising two or four spatial modes can be combined with QAM and a correlation between the symbol states of the different spatial modes can be introduced leading to a lower bit per symbol rate of the signal while increasing the Euclidean distance between two adjacent symbol states of the transmitted signal. Accordingly, the same process can be applied on a combination of spatial modes and polarization modes, each spatial mode comprising a polarization division multiplexing with two polarization states (leading to a higher number of coded states). The symbol states of a spatial mode of a polarization mode being correlated with the symbol states of another spatial mode and/or other polarization mode, the correlation corresponding to the selection of only predetermined symbol states of a coded state to be transmitted with a given symbol state of another coded stated.

Thus, the embodiments of the present invention refer to a method providing adaptive bitrate capabilities and associated adaptive transmission reach in an optical network using a modulation scheme comprising a quadrature amplitude modulation combined with at least one other coded modulation by introducing a correlation between the symbol states of the different coded states. The correlation refers to the possible selection of only predetermined symbol states of another coded state in function of the selected symbol state of a given coded state, said selection being achieved so that the obtained Euclidean distance between two adjacent symbol states of a mapping diagram of all the possible symbol states is the largest. Such method does not require expensive equipment as the selection is achieved in the digital domain and provides a fine granularity of a one bit per symbol shift.

## Claims

1. Method for adapting a bitrate of a modulated signal in a wavelength division multiplexing optical network using a quadrature amplitude modulation with a given power of two, 2^{N} with N being a natural number larger than one, number of states combined with at least one other coded modulation comprising at least two different coded state, said method being **characterized in that** for a given quadrature amplitude modulation symbol state of a given coded state, only a predetermined number of quadrature amplitude modulation symbol states of the other at least one coded state associated with said given quadrature amplitude modulation symbol state of said given coded state are selected as quadrature amplitude modulation symbol states to be transmitted with said given quadrature amplitude modution symbol state, said predetermined number being a predetermined power of two, 2^{M}, smaller than the given power of two, 2^{N}, with M being a natural number smaller than N.

2. Method in accordance with claim 1 wherein the coded modulation is a polarization division multiplexing with two polarization states (P1, P2).

3. Method in accordance with claim 1 wherein the coded modulation is a spatial mode multiplexing with two or four spatial modes.

4. Method in accordance with claim 1 wherein the coded modulation is a spatial mode multiplexing with two or four spatial modes, the said spatial modes comprising a polarization division multiplexing with two polarization states.

5. Method in accordance with one of the previous claims wherein:
the number of coded states is two,
and wherein the selected quadrature amplitude modulation symbol states of the predetermined power of two, 2^{M}, of a second coded state are chosen so that:
- the Euclidean distance between two selected adjacent symbol states represented on a quadrature amplitude modulation constellation is the largest and,
- a symbol state of the second coded state belongs to at least one predetermined power of two, 2^{M}, associated with a given quadrature amplitude modulation symbol state of a first coded state.

6. Method in accordance with claim 5 wherein the predetermined power of two is chosen in function of the desired number of bits per symbol.

7. Method in accordance with claim 2 and 5 wherein the given power of two, 2^{N}, is equal to 16, N being equal to 4, providing a modulation of 8 bits per symbol without selection so that a selection of a predetermined power of two, 2^{M}, equal to 8, M being equal to 3, on the second polarization state provides a modulation of 7 bits per symbol, a selection with a predetermined power of two, 2^{M}, equal to 4, M being equal to 2, on the second polarization state provides a modulation of 6 bits per symbol and a selection with a predetermined power of two, 2^{M}, equal to 2, M being equal to 1, on the second polarization state provides a modulation of 5 bits per symbol.

8. Transmitter (1) of a wavelength division multiplexing optical network comprising mapping (3) and modulation means (6) configured to apply a quadrature amplitude modulation with a given power of two, 2^{N} with N being an natural number larger than one, number of states combined with at least one other coded modulation comprising at least two different coded states, said transmitter being **characterized in that** said mapping means are configured to select, for a given quadrature amplitude modulation symbol state of a given coded state, only a predetermined number of quadrature amplitude modulation symbol states of the other coded state, associated with said given quadrature amplitude modulation symbol state of said given coded state to be transmitted with said given quadrature amplitude modulation symbol state said predetermined number being a predetermined power of two, 2^{M}, smaller than the given power of two, with M being a natural number smaller than N, the predetermined power of two, 2^{M}, and wherein the modulation means (6) are configured to apply a modulation according to the mapping means (3) selection.

9. Transmitter (1) in accordance with claim 8 comprising:
- mapping means (3) also adapted to:
- receive a digital signal to be modulated,
- receive, from a control plane equipment, a modulation scheme to apply to the digital signal according to a desired bitrate,
- determine digital signal components according to the said modulation scheme and,
- transmit the said determined digital signal components to a plurality of digital to analogical converters,
- a plurality of digital to analogical converters (5) adapted to:
- receive a signal component from the mapping means,
- convert said signal component and,
- transmit said converted signal component to modulation means (6),
- modulations means (6) also adapted to modulate a carrier according to a analogical signal sent by digital to analogical converters (5).

10. Transmitter (1) in accordance with claim 9 wherein the modulation scheme corresponds to a quadrature amplitude modulation combined with a polarized division multiplexing modulation with a first and a second polarization states so that:
- the mapping means (3) are configured to provide four components corresponding to the inphase and quadrature components of the first and the second polarization states,
- the transmitter (1) comprises:
- four digital to analogical converters (5) receiving the four components,
- modulation means (6) comprising a first and a second nested Mach-Zehnder modulators (7) receiving the inphase and quadrature components of the respective first and second polarization states (P1, P2) provided by the four digital to analogical converters (5),
the input of the said first and second nested Mach-Zehnder modulators (7) being linked to a polarization maintaining optical fibre (11) supplied by a laser (9) and the output of the said first and second nested Mach-Zehnder modulators (7) being linked to a polarization beam combiner (13).

## Patentansprüche

1. Verfahren zur Anpassung einer Bitrate eines modulierten Signals in einem optischen Wellenlängenmultiplex-Netzwerk unter Verwendung einer Quadraturamplitudenmodulation mit einer gegebenen Zweierpotenz-Anzahl, 2^{N}, wobei N eine natürliche Zahl größer als eins ist, von Zuständen, kombiniert mit mindestens einer anderen codierten Modulation, welche mindestens zwei verschiedene codierte Zustände umfasst, wobei das besagte Verfahren **dadurch gekennzeichnet ist, dass** für einen gegebenen Quadraturamplitudenmodulations-Symbolzustand eines gegebenen codierten Zustands lediglich eine vorgegebene Anzahl von Quadraturamplitudenmodulations-Symbolzuständen des anderen mindestens einen mit dem besagten gegebenen Quadraturamplitudenmodulations-Symbolzustand des besagten assoziierten codierten Zustands als mit dem besagten gegebenen Quadraturamplitudenmodulations-Symbolzustand zu übertragende Quadraturamplitudenmodulations-Symbolzustände ausgewählt werden, wobei die besagte vorgegebene Anzahl eine vorgegebene Zweierpotenz, 2^{M}, kleiner als die gegebene Zweierpotenz, 2^{N}, ist, wobei M eine natürliche Zahl kleiner als N ist.

2. Verfahren nach Anspruch 1, wobei die codierte Modulation ein Polarisationsmultiplex mit zwei Polarisationszuständen (P1, P2) ist.

3. Verfahren nach Anspruch 1, wobei die codierte Modulation ein Polarisationsmultiplex mit zwei oder vier räumlichen Moden ist.

4. Verfahren nach Anspruch 1, wobei die codierte Modulation ein Polarisationsmultiplex mit zwei oder vier räumlichen Moden ist, wobei die besagten räumlichen Moden ein Palarisationsmultiplex mit zwei Polarisationszuständen umfassen.

5. Verfahren nach einem der vorstehenden Ansprüche, wobei
die Anzahl von codierten Zuständen zwei beträgt,
und wobei die ausgewählten Quadraturamplitudenmodulations-Symbolzustände der vorgegebenen Zweierpotenz, 2^{M}, eines zweiten codierten Zustands derart gewählt werden, dass
- der euklidische Abstand zwischen zwei ausgewählten Nachbarsymbolzuständen, welche auf einer Quadraturamplitudenmodulations-Konstellation dargestellt sind, die größte ist, und
- ein Symbolzustand des zweiten codierten Zustands mindestens einer mit einem gegebenen Quadraturamplitudenmodulations-Symbolzustand eines ersten codierten Zustands assoziierten vorgegebenen Zweierpotenz, 2^{M}, angehört.

6. Verfahren nach Anspruch 5, wobei die vorgegebene Zweierpotenz in Abhängigkeit von der gewünschten Anzahl von Bits pro Symbol gewählt wird.

7. Verfahren nach Anspruch 2 und 5, wobei die gegebene Zweierpotenz, 2^{N}, gleich 16 ist, wobei N gleich 4 ist, für das Erbringen einer Modulation von 8 Bits pro Symbol ohne Auswahl, so dass eine Auswahl einer vorgegebenen Zweierpotenz, 2^{M}, welche gleich 8 ist, wobei M gleich 3 ist, auf dem zweiten Polarisationszustand ein Modulation von 7 Bits pro Symbol erbringt, eine Auswahl mit einer vorgegebenen Zweierpotenz, 2^{M}, welche gleich 4 ist, wobei M gleich 2 ist, auf dem zweiten Polarisationszustand eine Modulation von 6 Bits pro Symbol erbringt und eine Auswahl mit einer vorgegebenen Zweierpotenz, 2^{M}, welche gleich 2 ist, wobei M gleich 1 ist, auf dem zweiten Polarisationszustand eine Modulation von 5 Bits pro Symbol erbringt.

8. Sender (1) eines optischen Wellenlängenmultiplex-Netzwerks, umfassend Abbildungs- (3) und Modulationsmittel (6), welche für das Anwenden einer Quadraturamplitudenmodulation mit einer gegebenen Zweierpotenz-Anzahl, 2^{N}, wobei N eine natürliche Zahl größer als eins ist, von Zuständen, kombiniert mit mindestens einer anderen codierten Modulation, welche mindestens zwei verschiedene codierte Zustände umfasst, konfiguriert sind, wobei der besagte Sender **dadurch gekennzeichnet ist, dass** die besagten Abbildungsmittel dafür konfiguriert sind, für einen gegebenen Quadraturamplitudenmodulations-Symbolzustand eines gegebenen codierten Zustands lediglich eine vorgegebene Anzahl von Quadraturamplitudenmodulations-Symbolzuständen des anderen codierten Zustands, welcher mit dem besagten gegebenen Quadraturamplitudenmodulations-Symbolzustand des besagten gegebenen codierten Zustands, der mit dem besagten gegebenen Quadraturamplitudenmodulations-Symbolzustand zu übertragen ist, assoziiert ist, auszuwählen, wobei die besagte vorgegebene Anzahl eine vorgegebene Zweierpotenz, 2^{M}, kleiner als die gegebene Zweierpotenz ist, wobei M eine natürliche Zahl kleiner als N, die vorgegebene Zweierpotenz, 2^{M}, ist, und wobei die Modulationsmittel (6) für das Anwenden einer Modulation gemäß der Auswahl des Abbildungsmittels (3) konfiguriert ist.

9. Sender (1) nach Anspruch 8, umfassend:
- Abbildungsmittel (3), ebenfalls ausgelegt für
- den Empfang eines zu modulierenden digitalen Signals,
- den Empfang, von einer Vorrichtung der Steuerebene, eines auf das digitale Signal gemäß einer gewünschten Bitrate anzuwendenden Modulationsschemas,
- das Ermitteln von digitalen Signalkomponenten gemäß dem besagten Modulationsschema, und
- das Übertragen der besagten digitalen Signalkomponenten an eine Vielzahl von Digital-Analog-Wandlern,
- eine Vielzahl von Digital-Analog-Wandlern (5), ausgelegt für
- den Empfang einer Signalkomponente von den Abbildungsmitteln,
- die Umwandlung der besagten Signalkomponente, und
- die Übertragung der besagten umgewandelten Signalkomponente an Modulationsmittel (6),
- Modulationsmittel (6), ebenfalls für das Modulieren einer Trägerfrequenz gemäß einem von den Digital-Analog-Wandlern (5) gesendeten analogen Signals ausgelegt.

10. Sender (1) nach Anspruch 9, wobei das Modulationsschema einer mit einer polarisierten Multiplexmodulation mit einem ersten und einem zweiten Polarisationszustand kombinierten Quadraturamplitudenmodulation entspricht, so dass
- die Abbildungsmittel (3) für die Bereitstellung von vier Komponenten, welche den Inphase- und Quadraturkomponenten des ersten und des zweiten Polarisationszustands entsprechen, konfiguriert ist,
- der Sender (1) umfasst:
- vier Digital-Analog-Wandler (5) für den Empfang von vier Komponenten,
- Modulationsmittel (6) mit einem ersten und einem zweiten geschachtelten Mach-Zehnder-Modulator (7) für den Empfang der Inphase- und Quadraturkomponenten der jeweiligen von den vier Digital-Analog-Wandlern (5) bereitgestellten ersten und zweiten Polarisationszustände (P1, P2),
wobei der Eingang des besagten ersten und des besagten zweiten geschachtelten Mach-Zehnder-Modulators (7) mit einer von einem Laser (9) versorgten polarisationserhaltenden optischen Faser (11) verbunden ist und der Ausgang des besagten ersten und des besagten zweiten geschachtelten Mach-Zehnder-Modulators (7) mit einem Polarisationsstrahl-Kombinator (13) verbunden ist.

## Revendications

1. Procédé d'adaptation d'un débit binaire d'un signal modulé dans un réseau optique de multiplexage par répartition en longueur d'onde en utilisant une modulation d'amplitude en quadrature avec une puissance donnée de deux, 2^{N}, N étant un entier naturel supérieur à un, le nombre d'états combinés avec au moins une autre modulation codée comprenant au moins deux états codés différents, ledit procédé étant **caractérisé en ce que** pour un état de symbole de modulation d'amplitude en quadrature donné d'un état codé donné, seul un nombre prédéterminé d'états de symbole de modulation d'amplitude en quadrature de l'autre au moins un état codé associé audit état de symbole de modulation d'amplitude en quadrature donné dudit état codé donné est sélectionné en tant qu'états de symbole de modulation d'amplitude en quadrature à transmettre avec ledit état de symbole de modulation d'amplitude en quadrature donné, ledit nombre prédéterminé étant une puissance prédéterminée de deux, 2^{M}, inférieure à la puissance donnée de deux, 2^{N}, M étant un entier naturel inférieur à N.

2. Procédé selon la revendication 1 dans lequel la modulation codée est un multiplexage par répartition en polarisation avec deux états de polarisation (P1, P2).

3. Procédé selon la revendication 1 dans lequel la modulation codée est un multiplexage en mode spatial avec deux ou quatre modes spatiaux.

4. Procédé selon la revendication 1 dans lequel la modulation codée est un multiplexage en mode spatial avec deux ou quatre modes spatiaux, lesdits modes spatiaux comprenant un multiplexage par répartition de polarisation avec deux états de polarisation.

5. Procédé selon l'une des revendications précédentes dans lequel :
le nombre d'états codés est deux,
et dans lequel les états de symbole de modulation d'amplitude en quadrature sélectionnés de la puissance prédéterminée de deux, 2^{M}, d'un deuxième état codé sont sélectionnés de sorte que :
- la distance euclidienne entre deux états de symboles adjacents sélectionnés représentés sur une constellation de modulation d'amplitude en quadrature est la plus importante et,
- un état de symbole du deuxième état codé appartient à au moins une puissance prédéterminée de deux, 2^{M}, associée à un état de symbole de modulation d'amplitude en quadrature donné d'un premier état codé.

6. Procédé selon la revendication 5 dans lequel la puissance prédéterminée de deux est choisie en fonction du nombre souhaité de bits par symbole.

7. Procédé selon les revendications 2 et 5 dans lequel la puissance donnée de deux, 2^{N}, est égale à 16, N étant égal à 4, fournissant une modulation de 8 bits par symbole sans sélection de sorte qu'une sélection d'une puissance prédéterminée de deux, 2^{M}, égale à 8, M étant égal à 3, sur le deuxième état de polarisation fournisse une modulation de 7 bits par symbole, une sélection avec une puissance prédéterminée de deux, 2^{M}, égale à 4, M étant égal à 2, sur le deuxième état de polarisation fournit une modulation de 6 bits par symbole et une sélection avec une puissance prédéterminée de deux, 2^{M}, égale à 2, M étant égal à 1, sur le deuxième état de polarisation fournit une modulation de 5 bits par symbole.

8. Émetteur (1) d'un réseau optique de multiplexage par répartition en longueur d'onde comprenant des moyens de mise en correspondance (3) et de modulation (6) configurés pour appliquer une modulation d'amplitude en quadrature avec une puissance donnée de deux, 2^{N}, N étant un entier naturel supérieur à un, le nombre d'états combinés avec au moins une autre modulation codée comprenant au moins deux états codés différents, ledit émetteur étant **caractérisé en ce que** lesdits moyens de mise en correspondance sont configurés pour sélectionner, pour un état de symbole de modulation d'amplitude en quadrature donné d'un état codé donné, seulement un nombre prédéterminé d'états de symbole de modulation d'amplitude en quadrature de l'autre état codé associé audit état de symbole de modulation d'amplitude en quadrature donné dudit état codé donné à transmettre, ledit nombre prédéterminé étant une puissance prédéterminée de deux, 2^{M}, inférieure à la puissance donnée de deux, M étant un entier naturel inférieur à N, la puissance prédéterminée de deux, 2^{M}, et dans lequel les moyens de modulation (6) sont configurés pour appliquer une modulation conformément à la sélection des moyens de mise en correspondance (3).

9. Émetteur (1) selon la revendication 8 comprenant :
- des moyens de mise en correspondance (3) également adaptés pour :
- recevoir un signal numérique à moduler,
- recevoir, à partir d'un équipement de plan de commande, un schéma de modulation à appliquer au signal numérique conformément à un débit binaire souhaité,
- déterminer des composantes de signal numérique conformément audit schéma de modulation et,
- transmettre lesdites composantes de signal numérique déterminées à une pluralité de convertisseurs numériques-analogiques,
- une pluralité de convertisseurs numériques-analogiques (5) adaptés pour :
- recevoir une composante de signal à partir des moyens de mise en correspondance,
- convertir ladite composante de signal et,
- transmettre ladite composante de signal convertie aux moyens de modulation (6),
- des moyens de modulation (6) également adaptés pour moduler une porteuse conformément à un signal analogique envoyé par des convertisseurs numériques-analogiques (5).

10. Émetteur (1) selon la revendication 9 dans lequel le schéma de modulation correspond à une modulation d'amplitude en quadrature combinée à une modulation à multiplexage par répartition polarisée avec un premier et un deuxième états de polarisation de sorte que :
- les moyens de mise en correspondance (3) sont configurés pour fournir quatre composantes correspondant aux composantes en phase et en quadrature des premier et deuxième états de polarisation,
- l'émetteur (1) comprend :
- quatre convertisseurs numériques-analogiques (5) recevant les quatre composantes,
- des moyens de modulation (6) comprenant un premier et un deuxième modulateurs Mach-Zehnder imbriqués (7) recevant les composantes en phase et en quadrature des premier et deuxième états de polarisation respectifs (P1, P2) fournis par les quatre convertisseurs numériques-analogiques (5),
l'entrée desdits premier et deuxième modulateurs Mach-Zehnder imbriqués (7) étant liée à une fibre optique à maintien de polarisation (11) fournie par un laser (9) et la sortie desdits premier et deuxième modulateurs Mach-Zehnder imbriqués (7) étant liée à un mélangeur de faisceaux de polarisation (13).
